Europäisches Patentamt

European Patent Office

Office européen des brevets

(11) Veröffentlichungsnummer: **0 495 178 A2**

# EUROPÄISCHE PATENTANMELDUNG

(21) Anmeldenummer: **91119711.9**

(22) Anmeldetag: **19.11.91**

(51) Int. Cl.⁵: **B60R 16/02**

(30) Priorität: **12.01.91 DE 4100778**

(43) Veröffentlichungstag der Anmeldung:
**22.07.92 Patentblatt 92/30**

(84) Benannte Vertragsstaaten:
**ES FR GB IT SE**

(71) Anmelder: **MERCEDES-BENZ AG**
**Mercedesstrasse 136**
**W-7000 Stuttgart 60(DE)**

(72) Erfinder: **Herges, Peter, Dr. Ing.**
**Buchenweg 8**
**W-7065 Winterbach(DE)**
Erfinder: **Hipp, Ulrich,Ing.**
**Silcherstrasse 11**
**W-7314 Wernau(DE)**
Erfinder: **Stiltz, Winfried,Ing.**
**Grunbacher Strasse 44**
**W-7056 Weinstadt 3(DE)**
Erfinder: **Thurner, Thomas,Ing.**
**Im Feldle 15**
**W-7312 Kirchheim(DE)**
Erfinder: **Feurer, Klaus,Ing.**
**Füllgässle 1**
**W-7054 Korb(DE)**

(54) Einrichtung zur seriellen Datenübertragung in einem Kraftfahrzeug.

(57) Eine Einrichtung zu seriellen Datenübertragung in einem Kraftfahrzeug wird beschrieben. Sie besteht aus einer symmetrisch wirkenden Schaltendstufe, einem nachgeschalteten Zweiwicklungs-Symmetrierübertrager und einer den Symmetrierübertrager abschließenden symmetrischen Übertragungsleitung, die als verdrillte Zweidrahtleitung ausgeführt ist- Der Symmetrierübertrager läßt symmetrische Signale praktisch ungehindert passieren, weist aber für unsymmetrische, d.h. Gleichtaktsignale, eine hohe Impedanz in Richtung der Endstufe bzw. über deren Innenwiderstand nach Masse auf. Daraus resultiert eine hohe Isolation der Endstufe gegenüber der Datenleitung für störende Gleichtaktsignale. Aus der Endstufe kommend werden diese wieder in die Endstufe und aus der Datenleitung kommend werden diese wieder in die Datenleitung reflektiert. Durch den hochohmigen Abschluß der Datenleitung für Gleichtaktsignale bilden sich nur geringe Gleichtaktströme längs der Datenleitung aus, und deshalb auch nur geringe gleichtaktverkettete Störmagnetfel-der.

Fig.1

Die Erfindung betrifft eine Einrichtung zur seriellen Datenübertragung in einem Kraftfahrzeug nach dem Oberbegriff des Anspruchs 1.

Moderne Fahrzeugkonzepte umfassen eine Vielzahl von elektronischen Steuergeräten, die bus- und/oder netzorientiert miteinander und/oder mit einem zentralen Motor- bzw. Fahrzeugmanagementrechner kommunizieren sollen. Der entsprechende Datentransfer erfolgt dabei digital.

Konzepte, die eine bitparallele Datenübertragung im Fahrzeug vorsehen, haben gegenüber solchen mit serieller Datenübertragung keine Bedeutung erlangt. Ein wesentlicher Grund hierfür ruht darin, daß im Kraftfahrzeug sehr rauhe Betriebsbedingungen vorherrschen, und jede einsparbare elektrische Verbindung bzw. Kontaktierung zu einer signifikanten Erhöhung der Betriebssicherheit führt, indem z.B. entsprechende parallel/Seriell-Wandler als integrierte Halbleiterbausteine oder gar onchip besonders hochzuverlässiger Prozessoren für Fahrzeuganwendungen eine weitaus höhere Über-Alles-Zuverlässigkeit als eine individuelle Leitungs- bzw. Aderverbindung zwischen entsprechenden Geräten erreichen.

Ein Problem serieller Übertragungskonzepte liegt in den hohen Bit-Übertragunsraten, die unerwünschte Störabstrahlungen entsprechender Datenleitungen zur Folge haben können, so daß es durch entsprechende Störeinstrahlung zu nachteiligen Beeinflussungen verschiedener Leitungen untereinander kommen kann. Eine entsprechende Beeinflussung kann gemäß Lehre der DE 38 07 418 A1 minimiert werden, indem entsprechende Leitungen z.B. als verdrillte, symmetrische Zweidrahtleitungen ausgeführt werden und die sie treibenden Leitungstreiberendstufen ebenfalls symmetrisch und so ausgeführt werden, daß sie die beiden Adern einer solchen Leitung hinsichtlich ihrer zwei logischen Zustände in Bezug auf einen Potential-Mittelwert annähernd mit gleichem Spannungsversatz mit jeweils entgegengesetzter Polarität ansteuern.

Entsprechende Maßnahmen befriedigen jedoch nur teilweise. Nachteilig erscheint, daß auf diese Weise z.T. erheblichen Beeinträchtigungen des Radioempfangs oder des Betriebs eines Funkgeräts oder -telephons im Fahrzeug nur in Grenzen, d.h. meist nur in unbefriedigendem Umfange entgegengewirkt werden kann. In diesem Zusammenhang ist es bekannt, entsprechende Zweidraht-Datenleitungen auch abgeschirmt auszuführen und die Signaladern entsprechender Datenleitungen über Tiefpaßfilter zu führen.

Nachteilig hierbei ist jedoch, daß über die Abschirmung solcher Leitungen Mantelströme fließen können, so daß die Abschirmung selbst gegenüber Abschirmungen anderer Leitungen bzw. gegenüber der allgemeinen Fahrzeugmasse als elektromagnetisch wirkende Antennenschlaufe fungiert, welche die zwischen verschiedenen Steuergeräten wirksame Massedifferenzstörungen insoweit induktiv zur Abstrahlung bringt. Andererseits bewirken Tiefpaßfilterungen eine unerwünschte Abflachung der Signalflanken und führen somit zu einer drastischen Herabsetzung der maximalen Datenrate auf solchen Leitungen. Eine solche ist jedoch unerwünscht.

Es ist daher Aufgabe der Erfindung, eine Einrichtung vorzuschlagen, mittels derer ein serieller Datenaustausch ohne die vorgenannten Probleme und insbesondere ohne nachteilige Beinträchtigung der Datenrate möglich ist.

Diese Aufgabe wird bei einer gattungsgemäßen Einrichtung mit den Merkmalen gemäß Anspruch 1 gelöst. Ein wesentlicher Vorteil der Erfindung ist in der Einfachheit und Kostengünstigkeit der Einrichtung zu sehen, sowie in der Tatsache, daß wahlweise teilgeschirmte oder ungeschirmte, verdrillte Zweidrahtleitungen als Übertragungsleitung verwendet werden können und daß bei geeigneter Dimensionierung eine störende Begrenzung der Datenrate bzw. eine Abflachung von Impulsflanken in fahrzeugspezifisch interessierenden Bereichen nicht auftritt.

Vorteilhafte Weiterbildungen sind nach Lehre der darauf rückbezogenen Ansprüche 2 bis 12 gegeben.

Ein Ausführungsbeispiel der Erfindung ist in der Zeichnung dargestellt und nachfolgend erläutert. Es zeigen:

Figur 1     ein schematisches Blockschaltbild der Einrichtung;

Figur 2     ein teilräumliches Ersatzschaltbild einer der beiden Übertragerwicklungen;

Figur 3     ein Über-Alles-Ersatzschaltbild einer der beiden Übertragervicklungen und ihrer Betriebsabschlüsse.

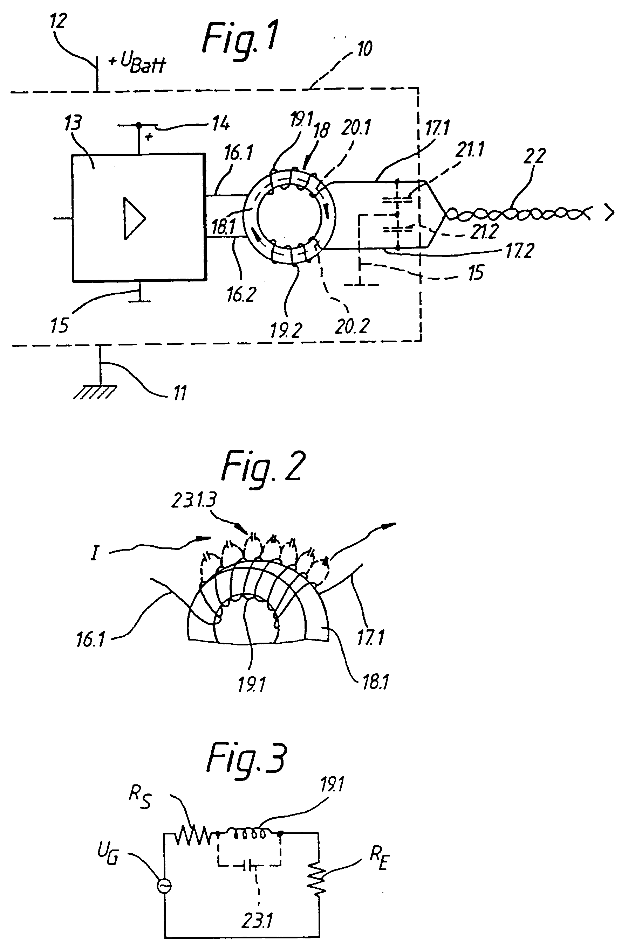

Gemäß **Figur 1** umfaßt die erfindungsgemäße Einrichtung sowohl Elemente, die einem Steuergerät 10 zuzurechnen sind, als auch eine Datenleitung 22. Diese führt zu einem Datenempfänger etwa in einem anderen Steuergerät, in einem Rechner, oder in einem Fahrzeugaggregat oder dgl..

Im zwischen die Bordnetzschiene 12 und Masse 11 geschalteten Steuergerät 10 ist eine digitale, ausgangsseitig symmetrisch wirkende Endstufe 13 vorgesehen, die beliebig ausgeführt sein kann, beispielsweise auch als integrierter Leitungstreiber. Die Endstufe 13 ist geräteintern zwischen eine Versorgungsschiene 14 und die Gerätemasse 15 geschaltet. Sie weist zwei komplementäre, und insoweit gegenphasig wirkende Ausgänge 16.1 und 16.2 auf, die gegeneinander vorzugsweise eine Impedanz aufweisen, die zumindest annähernd derjenigen der Datenleitung 22 entspricht.

Die Signale der beiden Ausgänge der Endstufe 13 sind über zwei gleichartige Wicklungen 19.1 und 19.2 um einen magnetisierbaren Kern 18.1 eines Übertragers 18 geführt, letztwelcher eine im wesentlichen geschlossene Feldführung aufweist. Der Windungssinn der beiden Wicklungen ist dabei so gewählt, daß die von symmetrischen Signalströmen der Endstufe im Übertragerkern hervorgerufenen magnetischen Flüsse einander entgegenwirken, d.h. sich aufheben, und daß die von unsymmetrischen Signalstromanteilen bewirkten magnetischen Flüsse 20.1 und 20.2 gleich gerichtet sind, sich also addieren. Daraus resultiert für unsymmetrische Signalstromkomponenten eine zwischen der Endstufe und den Wicklungsausgängen 17.1 und 17.2 wirksame Transferinduktivität, welche insoweit die an vorerwähnte Wicklungsausgänge 17.1 und 17.2 angeschlossene Datenleitung 22 hinsichtlich asymmetrischer Signale von der Endstufe 13 entkoppelt bzw. isoliert.

Anzumerken ist, daß der Übertrager insoweit für in der Endstufe 13 symmetrisch generierte und symmetrisch abgenommene und an die symmetrische Datenleitung 22 weitergeleitete Signale keine nennenswerte Dämpfung verursacht, und im übrigen aufgrund der festen Flußverkettung der zwei Wicklungen 19.1 und 19.2 teilsymmetrische Signale symmetriert, soweit unsymmetrische Signalanteile nicht durch besagte Transferinduktivität bzw. deren Blindwiderstand in die Endstufe bzw. in die Datenleitung reflektiert werden. Dies bedeutet, daß der an sich einfache Übertrager 18 auch gewisse Unsymmetrien der Ausgangskennlinie der Endstufe 13 auszugleichen vermag, indem er durch eine erzwungene Stromgleichverteilung die leichtaktunterdrückung und insoweit die Asymmetriedämpfung des Endstufenausganges erhöht.

Der Kern 18.1 des Übertragers 18 kann vielfältig beschaffen sein. Er kann z.B. ein Formpreßling aus Ferrit oder ein solcher aus gebundenem Carbonyleisen-Pulvermaterial sein und die Gestalt eines Rinkerns, Rohrkerns oder Mehrfachlochkörpers aufweisen.

Die Datenleitung 22 ist am empfangsseitigen Ende durch einen symmetrischen Empfängereingang abgeschlossen, der vorzugsweise eine dem Wellenwiderstand der Datenleitung entsprechende Eingangsimpedanz hat. In Versuchen hat sich ein/eine solcher/solche von ca. 120 Ohm als sehr günstig erwiesen, da entsprechend dimensionierte Leitungen einerseits noch ausreichend robust und verschmutzungsunempfindlich sind und auch in ungeschirmter Ausführung eine für die meisten Anwendungen ausreichende Einstreudämpfung gegenüber elektromagnetischen Störungen im Fahrzeug aufweisen. Aus dem oben Erläuterten versteht sich, daß im Falle einer erforderlichen Abschirmung entsprechender Leitungen deren Abschirmung nur sende- oder empfangsseitig mit der Fahrzeug- oder Gerätemasse verbunden wird, um somit die oben erwähnte Abstrahlung von Störleistung aufgrund längs der Fahrzeugmasse abfallenden Störspannungen zu vermeiden.

Die Signalübertragung geschieht insoweit nur über die Datenleitung 22, d.h. isoliert von der Fahrzeugmasse 11, woraus sich gute Störspannungsabstände gegenüber masseverketteten Störströmen und -potentialen ergeben, wie sie im Fahrzeug allgemein unvermeidbar sind.

Unter bestimmten Voraussetzungen kann die Gleichtaktunterdrückung noch dadurch verbessert werden, daß im Steuergerät 10 die datenleitungsseitigen Wicklungsenden 17.1 und 17.2 über je eine Kapazität 21.1 bzw. 21.2 mit der Gerätemasse 15 verbunden werden. Diese Kapazitäten bilden innerhalb des Steuergeräts auch bezüglich des Übertragers 18 den pro Leitungsinduktivitätseinheit spezifischen Kapazitäsbelag der Leitung 22 nach, wodurch durch den Übertrager 18 hindurch eine Verbesserung der Anpassung der Datenleitung 22 für symmetrische Signale unmittelbar am Endstufenausgang erreicht werden kann. Hierfür reichen in der Regel sehr kleine Kapazitätswerte bis allenfalls wenige hundert Picofarad aus. Solche Kapazitäten können auch insbesondere dann Vorteile bringen, wenn eine einseitig geschirmte Datenleitung Anwendung findet und der - in Figur 1 nicht dargestellte - Schirm im sendeseitigen Steuergerät mit der Gerätemasse verbunden wird.

Für Anwendungen, bei denen eine besonders hohe Unsymmetriedämpfung erwünscht ist und eine hohe Bandbreite erst in zweiter Linie eine Rolle spielt, können die beiden Wicklungen 19.1 und 19.2 auch aus einem zweidrähtigen, verdrillten Strang bestehen, welcher um den Kern 18.1 gewunden ist. Da bei dieser Lösung auch entlang den Wicklungen 19.1 und 19.2 ein definierter Kapazitätsbelag pro Induktivitätseinheit - vergleichbar dem der Datenleitung 22 - vorliegt, kann hier auf Kapazitäten 21.1 und 21.2 in der Regel verzichtet werden, es sei denn, daß sie zusammenwirkend mit besagtem Kapazitätsbelag für eine gewisse Frequenzgang- und/oder Anpassungkorrektur zwischen Datenleitung und Endstufe zweckmäßig sind.

**Figur 2** veranschaulicht am Beispiel der Wicklung 19.1, daß durch infinitesimale Zwischenwindungskapazitäten wie z.B. angedeutet 23.1.3 eine effektive Streukapazität 23.1 resultiert, letztwelche gemäß **Figur 3** der Gesamtheit aller Windungen der Wicklung 19.1 parallel geschaltet erscheint und zusammen mit deren Induktivität zwischen dem Innenwiderstand $R_S$ der Endstufe und dem Innenwiderstand $R_E$ der Empfangsseite einen Resonanzkreis bildet, der eine hohe Serienimpedanz bei seiner Resonanzfrequenz darstellt. In Abhängigkeit von seiner Frequenz fließt ein Wechselstrom I insoweit also teilweise durch die Wicklung 19.1, teilweise durch ihre Streukapazität 23.1. Der Resonanzkreis vermag Gleichtaktstörsignalanteile $U_G$ vorzugsweise mit Frequenzen oberhalb seiner Resonanzfrequenz zu übertragen, da der Resonanzkreis hierbei vorwiegend kapazitiv und die Kapazität 23.1 mit wachsender Frequenz zunehmend als Kurzschluß wirkt. Aus diesen Gründen hat es sich für die Verhältnisse im Kraftfahrzeug als besonders vorteilhaft erwiesen, den Übertrager 18 und seine Wicklungen 19.1 und 19.2 so zu dimensionieren, daß ihre resultierenden Resonanzfrequenzen oberhalb 40 MHz, vorzugsweise oberhalb des UKW-Rundfunkbandes zu liegen kommen. Auf diese Weise kann auch die parasitäre Abstrahlung von unsymmetrischen Signalanteilen in den UKW-Rundfunkbereich eines Rundfunkempfängers im Fahrzeug minimiert werden.

**Patentansprüche**

1. Einrichtung zur seriellen Datenübertragung in einem Kraftfahrzeug, welche wenigstens teilweise in einem mit der Bordnetzspannung und der Fahrzeugmasse verbundenen elektronischen Steuergerät vorgesehen ist, letztwelches Daten über eine Endstufe und eine an diese angeschlossene Datenleitung an einen Datenempfänger abzugeben vermag, wobei die Endstufe als digitale, symmetrische Schaltendstufe mit zwei komplementären Ausgängen ausgebildet und die Datenleitung als verdrillte, symmetrische Zweidrahtleitung ausgebildet ist.
   **dadurch gekennzeichnet,**
   - daß die beiden Ausgänge (16.1, 16.2) der Endstufe mit einem Übertrager (18) zusammenwirken dergestalt, daß sie über zwei einander entsprechende, gleichartige und voneinander isolierte Wicklungen (19.1, 19.2) um einen gemeinsamen, magnetisch leitfähigen Kern 18.1 geführt sind, wobei besagte Wicklungen (19.1, 19.2) so in Bezug aufeinander gewunden sind, daß sich die Magnetfelder (20.1, 20.2) gleichphasiger Ströme aus den beiden Ausgängen der Endstufe addieren, und
   - daß die freien Wicklungsenden (17.1, 17.2) mit besagter Datenleitung (22) verbunden sind.

2. Einrichtung nach Anspruch 1,
   **dadurch gekennzeichnet,**
   - daß der magnetisch leitfähige Kern (18.1) ein Formpreßling aus Ferrit ist.

3. Einrichtung nach Anspruch 1,
   **dadurch gekennzeichnet,**
   - daß der magnetisch leitfähige Kern (18.1) ein Ringkern oder ein Rohrkern oder ein Mehrfachlochkern aus Ferritmaterial ist.

4. Einrichtung nach Anspruch 1,
   **dadurch gekennzeichnet,**
   - daß der magnetisch leitfähige Kern (18.1) ein Formpreßling aus gebundenem Carbonyleisen-Pulvermaterial ist.

5. Einrichtung nach Anspruch 1,
   **dadurch gekennzeichnet,**
   - daß von den mit den beiden Datenleitungsadern verbundenen Wicklungsenden (17.1, 17.2) je ein Kondensator (21.1, 21.2) nach der Gerätemasse (15) des Steuergeräts (10) geschaltet ist.

6. Einrichtung nach Anspruch 5,
   **dadurch gekennzeichnet,**
   - daß beide Kondensatoren (21.1, 21.2) gleiche Kapazitäten aufweisen.

7. Einrichtung nach Anspruch 1,
   **dadurch gekennzeichnet,**
   - daß der Wellenwiderstand der Datenleitung (22) im Bereich zwischen 90 bis 150 Ohm liegt.

8. Einrichtung nach Anspruch 1,
   **dadurch gekennzeichnet,**
   - daß die Datenleitung (22) abgeschirmt ist, und daß die Abschirmung nur mit der Gerätemasse (15) des die Endstufe (13) umfassenden Steuergerätes (10) verbunden ist.

9. Einrichtung nach Anspruch 1,
   **dadurch gekennzeichnet,**
   - daß die Datenleitung (22) abgeschirmt ist, und daß die Abschirmung nur mit der Gerätemasse des den entsprechenden Datenempfänger umfassenden Gerätes oder Aggregats im Fahrzeug verbunden ist.

10. Einrichtung nach Anspruch 1,
    **dadurch gekennzeichnet,**
    - daß die beiden Wicklungen (19.1, 19.2) als individuelle Wicklungen räumlich voneinander getrennt angeordnet sind.

11. Einrichtung nach Anspruch 1,
    **dadurch gekennzeichnet,**
    - daß die beiden Wicklungen (19.1, 19.2) aus einem verdrillten Zweidrahtstrang gebildet sind, welcher um besagten Kern (18.1) gewunden ist.

12. Einrichtung nach Anspruch 1,
**dadurch gekennzeichnet**,
- daß besagte Wicklungen (19.1, 19.2) und ihr magnetisch leitfähiger Kern (18.1) so beschaffen bzw. ausgebildet sind, daß die Wicklungsinduktivitäten in Verbindung mit integralen Wicklungskapazitäten jeweils eine Eigenresonanzfrequenz größer als 40 MHz aufweisen.

## Fig.1

12

+ $U_{Batt}$

10

13

14

19.1  18  20.1  17.1  21.1  22

16.1

18.1

16.2

19.2  20.2

21.2
17.2
15

15

11

## Fig. 2

231.3

I

16.1

19.1

17.1

18.1

## Fig.3

$R_S$

19.1

$U_G$

$R_E$

23.1